# FASCICULE DE BREVET EUROPEEN

(11) **EP 0 802 224 B1**
(45) Date de publication et mention de la délivrance du brevet: **02.02.2000**
(21) Numéro de dépôt: 97400819.5
(22) Date de dépôt: 10.04.1997
(51) Int. Cl.: C08L 43/04, C08L 23/02

(54) **Composition extrudable et réticulable à l'air**
Lufvernetzende extrudierbare Zusammensetzung
Air curable extrudable composition

(30) Priorité: 16.04.1996 FR 9604723
(43) Date de publication de la demande: 22.10.1997
(73) Titulaire: ALCATEL, 75008 Paris (FR)
(72) Inventeur: Prigent, Madeleine, 91460 Marcoussis (FR); Chailie, Alain, 91680 Bruyeres le Chatel (FR)
(74) Mandataire: Buffière, Michelle

(56) Documents cités:
- EP-A- 0 181 735
- EP-A- 0 324 430
- EP-A- 0 580 076

## Description

La présente invention porte sur des compositions extrudables et réticulables à l'air, du type comportant un matériau polymère thermoplastique et un élastomère.

Le document EP-A-0324430 divulgue une composition extrudable et réticulable, comportant une matrice continue d'un matériau polymère thermoplastique contenant des groupements silane hydrolysables et des fines particules d'un caoutchouc vulcanisé (ou réticulé) qui sont dispersées dans ladite matrice continue.

La composition extrudée est réticulée en présence d'eau. Elle présente alors d'excellentes propriétés mécaniques et est très stable en température du fait de sa réticulation. Elle peut être utilisée en particulier mais non exclusivement pour la réalisation de gaines de câbles et fils électriques.

Selon ce document, le matériau polymère thermoplastique contenant les groupements silane hydrolysables est de préférence initialement greffé par un composé silane insaturé et hydrolysable. Le matériau polymère thermoplastique utilisé pour son greffage silane est en particulier un polyétyhylène ou un copolymère d'éthylène et d'au moins une α oléfine contenant 2 à 6 atomes de carbone, ou un copolymère d'éthylène et d'ester insaturé d'un acide carboxylique. Le composé silane insaturé et hydrolysable utilisé est par exemple le vinyl tri méthoxy-silane, le vinyl tri éthoxy-silane ou un vinyl tri méthoxy et éthoxy-silane. Il est greffé sur le matériau polymère thermoplastique en présence d'un peroxyde.

La réticulation du matériau est provoquée par l'hydrolyse et la condensation des groupes alkoxy. Afin que cette réticulation ait lieu, l'échantillon est immergé dans de l'eau à 90°C contenant un catalyseur de condensation des groupements silane. Dans une autre variante, l'échantillon est stocké à l'air humide pendant plusieurs semaines pour sa réticulation. La réticulation dans ces dernières conditions est provoquée par un catalyseur de condensation des groupements silane, ajouté sous forme de mélange maître à la composition de base.

En variante, le matériau polymère thermoplastique contenant les groupements silane hydrolysables est un copolymère d'au moins une a monoléfine contenant de préférence de 6 à 8 atomes de carbone et d'un silane insaturé et hydrolysable. Un tel copolymère préférentiel est un copolymère éthylène vinyl-silane.

Dans la majorité des exemples donnés dans ce document, la composition est fabriquée en deux étapes : la première pour le greffage du silane sur le matériau polymère thermoplastique et la seconde pour la réticulation dynamique du caoutchouc et sa dispersion en fines particules dans la matrice continue de matériau polymère thermoplastique contenant les groupements silane hydrolysables.

Selon l'un des exemples donnés dans ce document, la composition est fabriquée en une seule étape, en plaçant ensemble dans un mélangeur un mélange de matériau polymère thermoplastique, de silane insaturé hydrolysable et de peroxyde, en l'occurrence du polyéthylène haute densité, du vinyl triéthoxy silane et le peroxyde, et un mélange de caoutchouc naturel avec un agent de vulcanisation et en les traitant ensemble à 180°C pendant quelques minutes. La fabrication de la composition en une seule étape selon cet exemple pose cependant le problème d'interférence réactionnelle du matériau polymère thermoplastique et de l'élastomère avec les autres constituants des deux mélanges. Les propriétés de la composition ainsi fabriquée ne sont à priori pas analogues à celles des compositions fabriquées en partant du matériau polymère thermoplastique initialement greffé silane, mais sont substantiellement dégradées.

Dans le document EP-A-0 181 735 la composition réticulable est composée d'un caoutchouc nitrile et d'un thermoplastique comportant des groupements silane hydrolysables. La réticulation de cette composition est effectuée comme précédemment en présence d'eau et de catalyseur de condensation des groupements hydrolysables. En variante, le thermoplastique contient des motifs polymérisés, tandis qu'un composé silane hydrolysable est ajouté au mélange pour réagir avec le thermoplastique et introduire des groupements silane hydrolysables dans le thermoplastique. La réticulation s'effectue comme précédemment et est très longue.

La présente invention a précisément pour but une composition des types précités, qui est réalisée en une seule étape en évitant ou tout au moins minimisant de manière satisfaisante ce problème d'interférence réactionnelle, dont la réticulation se fait à l'air, est rapide et ne nécessite pas la présence d'un catalyseur de condensation des groupements hydrolysables, qui présente des propriétés escomptées et même avantageusement des propriétés additionnelles, et qui est recyclable.

Elle a pour objet une composition extrudable et réticulable à l'air, constituée par un mélange comportant un matériau polymère thermoplastique, un composé silane hydrolysable, un élastomère non réticulé et un agent de réticulation, ledit matériau polymère thermoplastique et ledit composé silane hydrolysable portant respectivement des groupements réactifs de réaction sélective entre le matériau polymère thermoplastique et le composé silane, caractérisée en ce qu'elle comporte une charge contenant des groupements hydroxyles superficiels pour réagir avec les groupements hydrolysables du composé silane, tandis que ledit élastomère est réticulé dynamiquement et sélectivement par ledit agent de réticulation.

Cette composition réalisée en une étape réticule à l'air en quelques heures et est recyclable.

L'une des particularités de cette composition réside dans le choix de ses constituants de base, c'est-à-dire du matériau polymère thermoplastique et de l'élastomère qui en présence du silane utilisé et de l'agent de réticulation ont des cinétiques réactionnelles spécifiques et différentes dans ledit mélange.

Le matériau polymère thermoplastique portant ses groupements fonctionnels réactifs est un matériau stable du commerce.

Dans l'un des exemples préférés de fabrication de la composition, le matériau polymère thermoplastique est un polyéthylène (PE) greffé anhydride maléique (AM), l'élastomère est un copolymère d'éthylène vinyl-acétate (EVA), le composé silane est un aminoalkoxyl silane, la charge est de la magnésie et l'agent de réticulation un peroxyde. Les groupements amine de ce composé silane vont réagir sélectivement sur les groupements anhydride maléique du PE. L'EVA est réticulé dynamiquement par voie peroxydique, sans interférence substantielle du peroxyde avec le PE greffé AM, du fait de leur différence de cinétique de réticulation. La magnésie va réagir avec les groupements alkoxy du composé silane et active ainsi la réticulation à l'air de la composition. Elle améliore en outre les propriétés thermomécaniques de la composition réticulée et lui donne des propriétés ignifugeantes.

Avantageusement, la proportion pondérale de l'EVA est majoritaire par rapport à celle du PE greffé MA, dans leur mélange. Sa réticulation dynamique assure la stabilité des propriétés élastomériques de la composition, tant vis-à-vis des forces de cisaillement au cours de la réticulation dynamique pour sa dispersion dans la matrice ou phase continue thermoplastique que lors d'un recyclage ultérieur de la composition réticulée à l'air.

Des essais réalisés, en introduisant ensemble dans un mélangeur interne le PE greffé AM, l'EVA et la magnésie, en les homogénéisant ensemble et chauffant pour l'obtention d'un mélange homogène, en introduisant alors l'aminoalkoxyl silane puis le peroxyde et en prolongeant le chauffage tout en effectuant un fort cisaillement pendant quelques minutes, ont donné toute satisfaction.

Il a été constaté que les compositions ainsi réalisées et extrudées réticulent de manière suprenante très rapidement à l'air ambiant. Les articles en ces compositions présentent une tenue élevée au fluage avec la température, quelques heures après leur élaboration, et sont parfaitement recyclables.

Dans la composition, les parts pondérales exprimées en pourcentage dans le mélange du matériau polymère thermoplastique avec l'élastomère peuvent être :
- pour le polymère thermoplastique greffé de ses groupements fonctionnels réactifs de 5 à 75 parts, et de préférence de 10 à 30 parts,
- pour l'élastomère de 25 à 95 parts et de préférence de 70 à 90 parts,
- pour le composé silane de 0,5 à 5 parts et de préférence de 0,7 à 2,5 parts, et
- pour le peroxyde de 0,5 à 7 parts et de préférence de 0,5 à 3 parts.

La quantité de charge minérale peut être de 10 à 230 parts pour 100 parts de mélange de polymère thermoplastique et d'élastomère et de préférence de 150 à 200 parts, selon le niveau des propriétés additionnelles souhaité.

En variante, la charge minérale adoptée peut être de l'alumine, du kaolin ou du mica, au lieu de la magnésie, pour réagir comme cette dernière sur les groupements alkoxy du composé silane hydrolysable. De la craie ou du noir de carbone peuvent également être ajoutés au mélange, mais ils n'auront que peu d'influence sur les propriétés thermomécaniques du mélange dans la mesure où ils ne réagissent pas avec l'alkoxylsilane.

Le matériau polymère thermoplastique peut être le PE greffé MA indiqué ci-avant et plus particulièrement du PE haute densité (PE hd) ou linéaire ainsi greffé, ou peut en variante être un copolymère d'éthylène tel qu'un EVA greffé MA ou un EPR greffé MA ou un PP ou un copolymère de PP.

En variante aussi, les groupements fonctionnels réactifs anhydride maléique greffés sur le matériau polymérique thermoplastique peuvent être remplacés par différents groupements fonctionnels, tel que d'autres groupements anhydride ou des groupements époxy, amine, acide carboxylique ou alcool notamment, susceptibles de réagir avec les groupements amine ou autres appropriés portés par le composé silane hydrolysable.

A titre d'exemples, si la matériau polymère thermoplastique est greffé de groupements fonctionels époxy, tout composé silane comportant des groupements terminaux amine primaire ou secondaire, acide carboxylique, alcool ou mercaptan notamment peut être utilisé. Si le matériau polymère thermoplastique est greffé de groupements fonctionnels amine, le composé silane comportera quant à lui des groupements réactifs vis-à-vis du groupement amine.

En particulier, le matériau polymère thermoplastique peut être un EPR greffé acide acrylique, ou un EVA greffé acide acrylique, ou un copolymère d'éthylène et d'acrylate d'alkyle comportant des groupements époxy.

L'élastomère utilisé, au lieu de l'EVA, peut lui-même en variante être choisi parmi notamment l'EBA, EEA, EMA, EPDM, EPR ou plus généralement des copolymères à base d'éthylène ou de propylène en mélange tels que ceux couramment utilisés dans l'industrie des câbles électriques.

L'agent peroxydrique de réticulation dynamique de l'élastomère peut aussi varier en conséquence, suivant la nature de cet élastomère, à condition qu'il provoque sélectivement la réticulation de l'élastomère. Ainsi par exemple, si l'élastomère utilisé est un EPDM, l'agent de réticulation est choisi parmi les composés peroxydiques, les résines phénoliques et les dérivés soufrés, notamment.

Différents exemples de formulation de la composition sont donnés dans le tableau suivant, en indiquant le nombre de parts de chaque constituant pour 100 parts de mélange du polymère thermoplastique avec l'élastomère, les propriétés de résistance R à la rupture, exprimée en MPa, d'allongement A à la rupture, exprimé en %, et de tenue au fluage ou déformation D à 200°C et de déformation rémanente Dr exprimés en %, ainsi que l'indice d'oxygène limite IOL, pour chaque formulation.

**TABLEAU**

| | PARTS | PARTS | PARTS | PARTS |
|---|---|---|---|---|
| PEhd - AM | 20 | - | - | - |
| EPR - AM | - | 20 | - | - |
| EVA - AM | - | - | 20 | - |
| PE linéaire-AM | - | - | - | 20 |
| EVA (26 % VA) | 20 | 20 | 20 | 20 |
| EVA (40 % VA) | 60 | 60 | 60 | 60 |
| Magnésie hydratée | 150 | 150 | 150 | 150 |
| Aminoalkoxylsilane | 2 | 2 | 2 | 2 |
| Peroxyde | 2 | 2 | 2 | 2 |
| Antioxydant | 0,5 | 0,5 | 0,5 | 0,5 |
| R (MPa) | 15,7±1,1 | 13,1±0,6 | 14,1±0,2 | 15,5±0,8 |
| A (%) | 166±11 | 234±6 | 202±8 | 187±10 |
| D (%) | 40 | 60 | 85 | 60 |
| Dr (%) | 3 | 14 | 29 | 19 |
| IOL | 37 | 38 | 39 | 38 |

## Revendications

1. Composition extrudable et réticulable à l'air, constituée par un mélange comportant un matériau polymère thermoplastique, un composé silane hydrolysable, un élastomère non réticulé et un agent de réticulation, ledit matériau polymère thermoplastique et ledit composé silane hydrolysable portant respectivement des groupements réactifs de réaction sélective entre le matériau polymère thermoplastique et le composé silane, caractérisée en ce qu'elle comporte une charge contenant des groupements hydroxyles superficiels pour réagir avec les groupements hydrolysables du composé silane, tandis que ledit élastomère est réticulé dynamiquement et sélectivement par ledit agent de réticulation dans ledit mélange.

2. Composition selon la revendication 1, caractérisée en ce que les groupements réactifs portés par ledit matériau polymère thermoplastique sont choisis parmi des fonctions anhydride, époxy, amine, acide, et alcool.

3. Composition selon la revendication 1, caractérisée en ce que les groupements réactifs portés par ledit composé silane hydrolysable sont choisis parmi des fonctions amine, acide carboxylique, alcool et mercaptan.

4. Composition selon la revendication 1, caractérisée en ce que les groupements réactifs sont respectivement des fonctions anhydride maléique pour les uns et des fonctions amine pour les autres.

5. Composition selon l'une des revendications 1 à 4, caractérisée en ce que ledit polymère thermoplastique est choisi parmi un polyéthylène, un copolymère d'éthylène, un propylène, un copolymère de propylène, et un copolymère d'éthylène propylène.

6. Composition selon l'une des revendications 1 à 5, caractérisée en ce que ledit élastomère est constitué par au moins un copolymère d'éthylène et/ou de propylène.

7. Composition selon la revendication 6, caractérisée en ce que ledit agent de réticulation est choisi parmi un peroxyde, une résine phénolique et un dérivé soufré.

8. Composition selon l'une des revendications 1 à 7, caractérisée en ce que ladite charge est choisie parmi la magnésie, l'alumine, le kaolin et le mica.

9. Composition selon l'une des revendications 1 à 8, caractérisée en ce qu'elle comporte de 5 à 75 parts dudit matériau thermoplastique, de 25 à 95 parts dudit élastomère, de 0,5 à 5 parts du composé silane, de 0,5 à 7 parts dudit agent de réticulation et de 10 à 230 parts de ladite charge, pour 100 parts dudit matériau polymère thermoplastique avec ledit élastomère dans ledit mélange.

10. Composition selon la revendication 9, caractérisée en ce qu'elle comporte de 10 à 30 parts dudit matériau polymère thermoplastique, de 70 à 90 parts dudit élastomère, de 0,7 à 2,5 parts du composé silane, de 0,5 à 3 parts dudit agent de réticulation et de 150 à 200 parts de ladite charge.

## Patentansprüche

1. Extrudierbare und luftvernetzbare Zusammensetzung, die durch eine Mischung gebildet wird, die ein thermoplastisches Polymermaterial, eine hydrolisierbare Silanverbindung, ein unvernetztes Elastomer und ein Vernetzungsmittel umfaßt, wobei das genannte thermoplastische Polymermaterial und die genannte hydrolisierbare Silanverbindung jeweils reaktive Gruppen zur selektiven Reaktion zwischen dem thermoplastischen Polymermaterial und der Silanverbindung tragen,
**dadurch gekennzeichnet, daß** sie einen Füllstoff aufweist, der oberflächliche Hydroxylgruppen enthält um mit den hydrolisierbaren Gruppierungen der Silanverbindung zu reagieren, während das genannte Elastomer durch das genannte Vernetzungsmittel in der genannten Mischung dynamisch und selektiv vernetzt wird.

2. Zusammensetzung nach Anspruch 1,
**dadurch gekennzeichnet, daß** die von dem genannten thermoplastischen Polymermaterial getragenen reaktiven Gruppierungen aus den Anhydrid-, Epoxy-, Amin-, Säure- und Alkoholfunktionen gewählt sind.

3. Zusammensetzung nach Anspruch 1,
**dadurch gekennzeichnet, daß** die von der genannten hydrolisierbaren Silanverbindung getragenen reaktiven Gruppierungen aus den Amin-, Carboxylsäure-, Alkohol- und Mercaptanfunktionen gewählt sind.

4. Zusammensetzung nach Anspruch 1,
**dadurch gekennzeichnet, daß** die reaktiven Gruppierungen jeweils einerseits Maleinsäureanhydridfunktionen und andererseits Aminfunktionen sind.

5. Zusammensetzung nach einem der Ansprüche 1 bis 4,
**dadurch gekennzeichnet, daß** das genannte thermoplastische Polymer aus einem Polyethylen, einem Copolymer des Ethylens, einem Propylen, einem Copolymer des Propylens und einem Ethylen-Propylen-Copolymer gewählt ist.

6. Zusammensetzung nach einem der Ansprüche 1 bis 5,
**dadurch gekennzeichnet, daß** das genannte Elastomer durch wenigstens ein Ethylen-Copolymer und/oder Propylen gebildet ist.

7. Zusammensetzung nach Anspruch 6,
**dadurch gekennzeichnet, daß** das genannte Vernetzungsmittel aus einem Peroxid, einem Phenolharz und einem Schwefelderivat gewählt ist.

8. Zusammensetzung nach einem der Ansprüche 1 bis 7,
**dadurch gekennzeichnet, daß** der genannte Füllstoff aus Magnesia, Tonerde, Kaolin und Mica gewählt ist.

9. Zusammensetzung nach einem der Ansprüche 1 bis 8,
**dadurch gekennzeichnet, daß** sie von 5 bis 75 Teile des genannten thermoplastischen Materials, von 25 bis 95 Teile des genannten Elastomers, von 0,5 bis 5 Teile der Silanverbindung, von 0,5 bis 7 Teile des genannten Vernetzungsmittels und von 10 bis 230 Teile des genannten Füllstoffs auf 100 Teile des genannten thermoplastischen Polymermaterials mit dem genannten Elastomer in der genannten Mischung umfaßt

10. Zusammensetzung nach Anspruch 9,
**dadurch gekennzeichnet, daß** sie von 10 bis 30 Teile des genannten thermoplastischen Polymermaterials, von 70 bis 90 Teile des genannten Elastomers, von 0,7 bis 2,5 Teile der Silanverbindung, von 0,5 bis 3 Teile des genannten Vernetzungsmittels und von 150 bis 200 Teile des genannten Füllstoffs umfaßt.

## Claims

1. A composition that is extrudable and curable in air, the composition being constituted by a mixture comprising a thermoplastic polymer material, a hydrolysable silane compound, a non-cured elastomer, and a curing agent, said thermoplastic polymer material and said hydrolysable silane compound respectively carrying reactive groups for selective reaction between the thermoplastic polymer material and the silane compound, the composition being characterized in that it includes a filler containing superficial hydroxyl groups for reacting with the hydrolysable groups of the silane compound, while said elastomer is cured dynamically and selectively by said curing agent in said mixture.

2. A composition according to claim 1, characterized in that the reactive groups carried by said thermoplastic polymer material are selected from anhydride, epoxy, amine, acid, and alcohol functions.

3. A composition according to claim 1, characterized in that the reactive groups carried by said hydrolysable silane compound are selected from amine, carboxylic acid, alcohol, and mercaptan functions.

4. A composition according to claim 1, characterized in that the reactive groups are respectively maleic anhydride functions in one case and amine functions in the other.

5. A composition according to any one of claims 1 to 4, characterized in that said thermoplastic polymer is selected from a polyethylene, an ethylene copolymer, a propylene, a propylene copolymer, and an ethylene propylene copolymer.

6. A composition according to any one of claims 1 to 5, characterized in that said elastomer is constituted by at least one ethylene copolymer and/or propylene copolymer.

7. A composition according to claim 6, characterized in that said curing agent is selected from a peroxide, a phenolic resin, and a sulfur derivative.

8. A composition according to any one of claims 1 to 7, characterized in that said filler is selected from magnesia, alumina, kaolin, and mica.

9. A composition according to any one of claims 1 to 8, characterized in that it comprises 5 parts to 75 parts of said thermoplastic material, 25 parts to 95 parts of said elastomer, 0.5 parts to 5 parts of the silane compound, 0.5 parts to 7 parts of said curing agent, and 10 parts to 230 parts of said filler per 100 parts of said thermoplastic polymer material with said elastomer in said mixture.

10. A composition according to claim 9, characterized in that it comprises 10 parts to 30 parts of said thermoplastic polymer, 70 parts to 90 parts of said elastomer, 0.7 parts to 2.5 parts of the silane compound, 0.5 parts to 3 parts of said curing agent, and 150 parts to 200 parts of said filler.
